# EUROPEAN PATENT SPECIFICATION

(11) **EP 2 928 057 B1**
(45) Date of publication and mention of the grant of the patent: **13.07.2022**
(21) Application number: 15150223.4
(22) Date of filing: 06.01.2015
(51) Int. Cl.: H02M 7/00

(54) **POWER CONVERTING DEVICE AND RAILWAY VEHICLE MOUNTED WITH THE SAME**
ENERGIEUMWANDLUNGSVORRICHTUNG UND DAMIT AUSGERÜSTETES SCHIENENFAHRZEUG
DISPOSITIF DE CONVERSION DE PUISSANCE ET VÉHICULE FERROVIAIRE ÉQUIPÉ DE CELUI-CI

(30) Priority: 03.04.2014 JP 2014076621
(43) Date of publication of application: 07.10.2015
(73) Proprietor: Hitachi, Ltd., Tokyo (JP)
(72) Inventor: Ishikawa, Katsumi, Tokyo 100-8280 (JP); Nakata, Kiyoshi, Tokyo 100-8280 (JP); Tanaka, Takeshi, Tokyo 100-8280 (JP); Ogawa, Kazutoshi, Tokyo 100-8280 (JP); Konishide, Masaomi, Tokyo 100-8280 (JP)
(74) Representative: Mewburn Ellis LLP

(56) References cited:
- EP-A1- 2 675 053
- JP-A- 2002 142 444
- US-A1- 2011 308 834
- US-A1- 2012 305 283
- Dorin O. Neacsu: "Practical Aspects in Building Three-Phase Power Converters" In: "Power-Switching Converters: Medium and High Power", 25 May 2006 (2006-05-25), Boca Raton [u.a.] : CRC, Taylor & Francis, XP055527053, ISBN: 978-0-8247-2625-6 pages 179-180,
- James J. Licari: "Functions and Requirements of Coatings for Electronic Applications" In: "Coating Materials for Electronic Applications: Polymers, Processes, Reliability, Testing", 6 November 2003 (2003-11-06), Elsevier, XP055527058, ISBN: 978-0-8155-1492-3 pages 1-55, DOI: 10.1016/B978-081551492-3.50003-9,
- SCHERMDA ET AL: "Busbars", 1 January 1999 (1999-01-01), WILEY ENCYCLOPEDIA OF ELECTRICAL AND ELECTRONICS ENGINEE, WILEY, UK, PAGE(S) 624 - 634, XP008182567, ISBN: 0-471-13941-6 [retrieved on 1999-12-27]

## Description

### BACKGROUND

The present invention relates to a power converting device and a railway vehicle mounted with the same and in particular to a mounting structure of a gate driving circuit for driving a power module of a high voltage, large current power converting device.

In an inverter for converting a direct-current power to an alternating-current power and a converter for converting an alternating-current power to a direct-current power, a power module such as IGBT has been widely used. This power module is driven by a PWM signal from a microcomputer or the like mounted in a control logic portion of a converting portion via ON and OFF signals of a gate driving circuit. A portion which sends a signal from this gate driving circuit to the power module is a gate wire.

There is a gate wiring technique using a two-level structure in which a power device is arranged at a lower level and a control substrate is arranged thereon, and a gate wire is connected with a pin structure, as described in Japanese Unexamined Patent Application Publication No. Hei06(1994)-45518. This technique can be easily carried out in a case of using a power module with a withstand voltage of 1200 V or less, because main terminals of the power module are provided at an end of the power module.

A railway power converting device, a steel mill power converting device, and a wind power converting device use a power module with a withstand voltage of 1.7 kV or higher. In the power module with the withstand voltage of 1.7 kV or higher, main terminals thereof are arranged on a top surface thereof to be equally spaced from one another for ensuring a clearance insulation distance and a creepage insulation distance between terminals or from a heat sink of metal. Thus, a gate control terminal, a ground control terminal, and a high-voltage detection terminal are arranged in a small area of a portion relatively close to an end of the module. On the other hand, since a gate driving circuit for driving the power module includes a signal input portion, a power input portion, a logic portion, a protection circuit portion, and a gate resistance mounted therein, for example, the gate driving circuit is large and it is difficult to arrange it in an upper portion of the module.

Moreover, for reducing the size of the inverter, power modules for three phases are arranged to be close to each other. Thus, the gate driving circuit is arranged to be away from the power modules. As a wiring technique for driving the power module, a technique is known in which a wire having insulation coating is used, as described in Japanese Unexamined Patent Application Publication No. 2007-185026. The use of the wiring with insulation coating for high voltage application ensures the insulation reliability between terminals and from a bus bar and a heat sink.

As a wiring technique for driving the power module, a technique has been proposed in which conductor substrates are used as a gate-side wire and a cathode-side wire and are connected to each other with an insulation member therebetween, as described in Japanese Unexamined Patent Application Publication No. Sho61(1986)-227661. JP2002-142444-A discloses a power-converting device. JP 2002 142444 proposes a power converting device corresponding to the pre-characterising portions of claim 1 and claim 2.

### SUMMARY

A railway power converting device, a steel mill power converting device, and a wind power converting device use a power module with a withstand voltage of 1.7 kV or higher, as described before. Moreover, for reducing the size of the inverter, the power modules are arranged to be close to each other, and the gate wire with the insulation coating for high-voltage application is used, as described in Japanese Unexamined Patent Application Publication No. 2007-185026. However, in a case where the gate wire is long, the wire inductance of a gate is large, and there is a possibility that an overvoltage that is a predetermined voltage or higher is generated in the gate or the gate is affected by an electric field by a current flowing through the main circuit wire. Therefore, the inductance is reduced by configuring the gate and an emitter by stranded wires. This configuration, however, has a problem of an increase in the assembling steps.

In addition, Japanese Unexamined Patent Application Publication No. Sho61(1986)-227661 has proposed the technique in which the conductor substrates are used as the gate-side wire and the cathode-side wire and are connected to each other with the insulation member therebetween. This technique is effective for reduction in the inductance of the gate wire and reduction in the number of the assembling steps. However, in this technique, it is difficult to ensure the clearance distance of insulation and the creepage distance of insulation between the gate-side conductor substrate or the cathode-side conductor substrate, and the main terminals of the power module or the metal of the heat sink.

The present invention has been made in view of the above-described problems, and provides a gate driving circuit and a wiring structure which are excellent in assemblability and noise resistance and can ensure the insulation property.

In order to address the above object, according to a first aspect of the present invention, there is provided a power converting device as set forth in claim 1, and according to a second aspect of the present invention, there is provided a power converting device as set forth in claim 2.

According to the present invention, a gate driving circuit and a wiring structure can be provided which are excellent in assemblability and noise resistance and can ensure the insulation property.

### BRIEF DESCRIPTION OF THE DRAWINGS

FIG. 1 shows a configuration of an inverter device according to a first embodiment, when seen from the side;
FIG. 2 shows the configuration of the inverter device according to the first embodiment for one phase from which a capacitor and a bus bar are removed, when seen from the above;
FIG. 3 shows a configuration of an inverter device of a conventional example for one phase from which a capacitor and a bus bar are removed, when seen from the above;
FIG. 4 shows a cross section of a wiring conductor plate of a laminated structure with an insulation sheet between laminations according to the first embodiment, when cut near a control terminal portion;
FIG. 5 shows a cross section of the wiring conductor plate of the laminated structure with the insulation sheet between the laminations according to the first embodiment, when cut near a first control substrate;
FIG. 6 shows a cross section of a connecting portion between the wiring conductor plate of the laminated structure with the insulation sheet between the laminations according to the first embodiment and a control terminal of a power module;
FIG. 7 shows a cross section of a connecting portion between a wiring conductor plate of a laminated structure with an insulation sheet between laminations according to a second embodiment and a control terminal of a power module;
FIG. 8 shows a configuration of an inverter device according to a third embodiment in a case where three phases are integrated into one, from which a capacitor and a bus bar are removed, when seen from the above;
FIG. 9 shows a configuration of an inverter device according to a fourth embodiment in a case where three phases are integrated into one, from which a capacitor and a bus bar are removed, when seen from the above;
FIG. 10 shows a configuration of an inverter device according to a fifth embodiment from which a capacitor and a bus bar are removed, when seen from the above; and
FIG. 11 shows a cross section of a wiring conductor plate of a laminated structure with an insulation sheet between laminations according to the fifth embodiment.

### DETAILED DESCRIPTION

Embodiments of the present invention are described below, referring to the drawings.

### First Embodiment

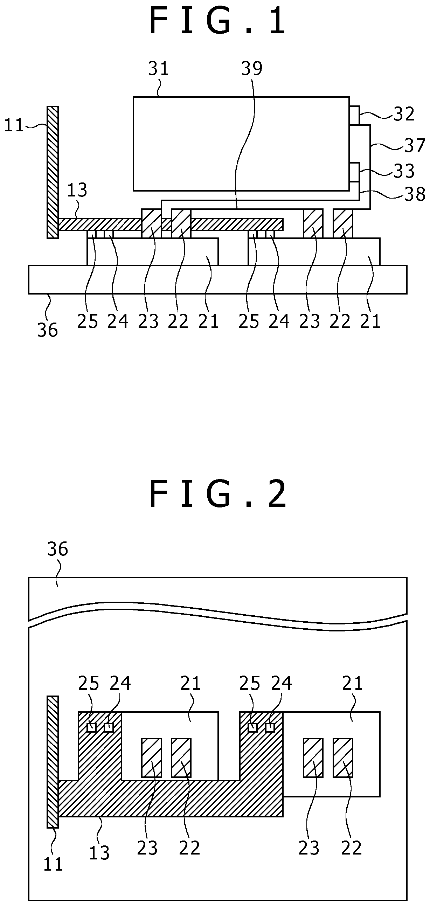

FIG. 1 shows a configuration of an inverter device according to a first embodiment of the present invention, when seen from the side. FIG. 2 shows the configuration of the inverter device according to the first embodiment from which a capacitor and a bus bar are removed, when seen from the above. While inverters for three phases are provided, both the drawings correspond to one phase.

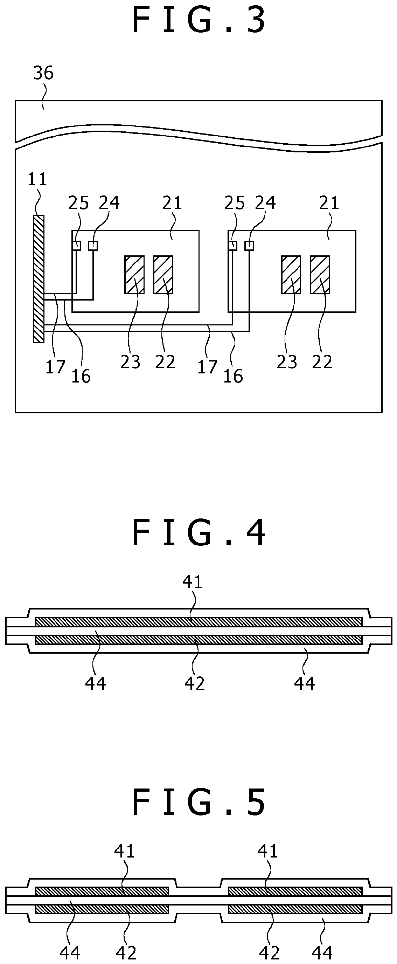

FIG. 3 shows a conventional method for mounting a gate wire and a ground wire. In the conventional method, a gate wire 16 and a ground wire 17, both shielded for high voltage application, are used. This method can reduce an inductance by employing a stranded wire for a gate and an emitter, but has a problem of an increase in the number of assembling steps.

In the first embodiment of the present invention, a power module 21 is mounted on a cooler 36. The power module 21 has a high-voltage main terminal 22 and a ground main terminal 23 on a central portion thereof. A capacitor 31 is arranged near the power module 21, and includes a power terminal 32 and a ground terminal 33 of the capacitor 31. For reducing a peak voltage at switching, a power main circuit wire 37 connecting from the power terminal 32 of the capacitor to the high-voltage main terminal 22 of the power module and a ground main circuit wire 38 connecting from the ground terminal 33 of the capacitor to the ground main terminal 23 of the power module are arranged to be as short as possible and to be adjacent to each other so that the inductance from the terminals of the capacitor 31 to the main terminals of the power module.

In the first embodiment of the present invention, a wiring conductor plate 13 of a laminated structure with an insulation sheet between laminations is arranged between a first control substrate 11 in which a signal input portion, a power input portion, a logic portion, a protection circuit portion, and a gate driving portion are mounted, and a gate control terminal 24 and a ground control terminal 25 of the power module. The present invention uses a conductor board in which a gate wire and a ground wire are laminated, thereby enabling large reduction in the number of assembling steps.

FIG. 4 shows a cross section of the wiring conductor plate 13 of the laminated structure with the insulation sheet between the laminations according to the first embodiment of the present invention, around the control terminals. The gate wire 41 and the ground wire 42 are arranged to sandwich an insulation sheet 44 therebetween. Also, the insulation sheets 44 are arranged outside the gate wire 41 and the ground wire 42 to sandwich the wires 41 and 42 therebetween. The insulation sheet 44 preferably has an insulation resistance of 100 MΩ or higher. The use of PET film composite material or Nomex sheet can provide an excellent insulation characteristic in a thickness of 0.5 mm or less. Moreover, lamination of the gate wire 41 and the ground wire 42 with the insulation sheet 44 arranged therebetween can largely reduce the wiring inductance of a gate circuit and can also reduce effects of an electric field by a current flowing through the main circuit wires. According to the present invention, a gate driving circuit can be configured which can largely reduce the number of assembling steps, can ensure the insulation property, and is excellent in noise resistance.

FIG. 5 shows a cross section of the wiring conductor plate 13 of the laminated structure with the insulation sheet between the laminations according to the first embodiment of the present invention, around the first control substrate. Around the first control substrate, the gate wire and the ground wire for an upper arm and those for a lower arm are both arranged. In the first embodiment, the gate wire 41 and the ground wire 42 for the upper arm are laminated with the insulation sheet 44 arranged therebetween, the gate wire 41 and the ground wire 42 for the lower arm are laminated with the insulation sheet 44 arranged therebetween, and the upper arm and the lower arm are spaced away with a predetermined insulation distance ensured therebetween.

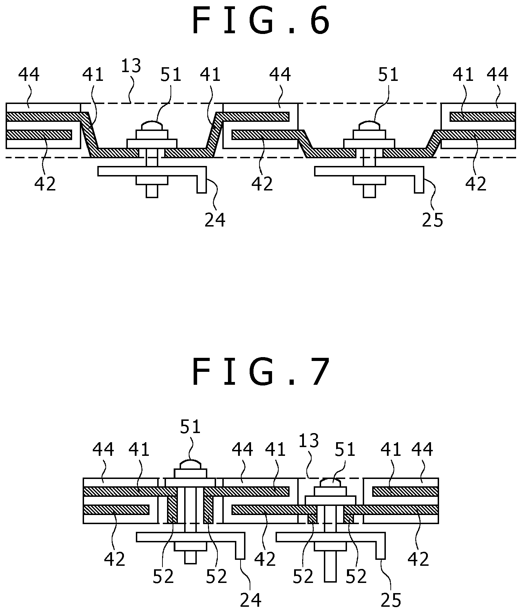

FIG. 6 shows a cross section of a connecting portion connecting the wiring conductor plate 13 of the laminated structure with the insulation sheet between the laminations and the gate control terminal 24 and the ground control terminal 25 of the power module to each other according to the first embodiment. The wiring conductor plate 13 of the laminated structure with the insulation sheet between the laminations is arranged such that the laminated structure extends near the gate control terminal 24 and the ground control terminal 25 of the power module. The ground wire 42 at the gate control terminal 24 is removed, the gate wire 41 at the ground control terminal 25 is removed, and the gate control terminal 24 and the ground control terminal 25 are connected to the gate wire 41 and the ground wire 42 by screws 51, respectively. By employing this structure, the wiring inductance of the gate circuit can be largely reduced and it is possible to ensure sufficient reliability of insulation in the connecting portion.

Also in a case where MOSFET is used as a power device constituting the power module in the present invention, other than IGBT, the effects can be obtained. Moreover, the use of a SiC (silicon carbide) diode or SiCMOS transistor can result in further reduction in the size. Any insulator may be used as the insulation sheet in the present invention as long as it provides the insulation property, and the shape of the insulator is not limited to the sheet shape. Furthermore, the "high voltage" in the present invention preferably means to have a withstand voltage of 1200 V or higher, particularly 1.7 kV or higher. In this case, the effects of the present invention can be enhanced.

### Second Embodiment

FIG. 7 shows a cross section of the connecting portion connecting the wiring conductor plate 13 of the laminated structure with the insulation sheet between laminations according to a second embodiment of the present invention and the gate control terminal 24 and the ground control module 25 of the power module to each other. The same parts as those in the first embodiment are labeled with the same reference signs.

The wiring conductor plate 13 has the laminated structure extending near the gate control terminal 24 and the ground control terminal 25 of the power module. The ground wire 42 is removed only at the gate control terminal 24, and the gate wire 41 is removed only at the ground control terminal 25. In connection of the gate control terminal 24 and the gate wire 41 to each other, the height is adjusted by means of a boss 52. With the screws 51, the gate control terminal 24 and the gate wire 41 are connected to each other and the ground control terminal 25 and the ground wire 42 are connected to each other. By employing this structure, it is possible to largely reduce the wiring inductance of the gate circuit and ensure a sufficient level of reliability of insulation in the connecting portion.

### Third Embodiment

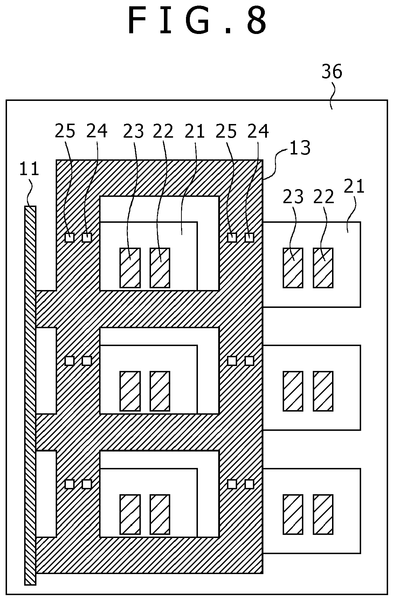

FIG. 8 shows a configuration of an inverter device according to a third embodiment of the present invention from which a capacitor and a bus bar are removed, when seen from the above. The same parts as those in the first embodiment are labeled with the same reference signs.

The configuration for three phases is shown in the third embodiment of the present invention, whereas the configuration for one phase is shown in the first embodiment. The use of the wiring conductor plate 13 in which parts for three phases are integrated and laminated with insulation sheets therebetween can reduce the number of parts and the assembling steps. According to the present invention, it is possible to configure a gate driving circuit for driving a power module, which can largely reduce the number of the assembling steps, can ensure the insulation property, and is excellent in noise resistance.

### Fourth Embodiment

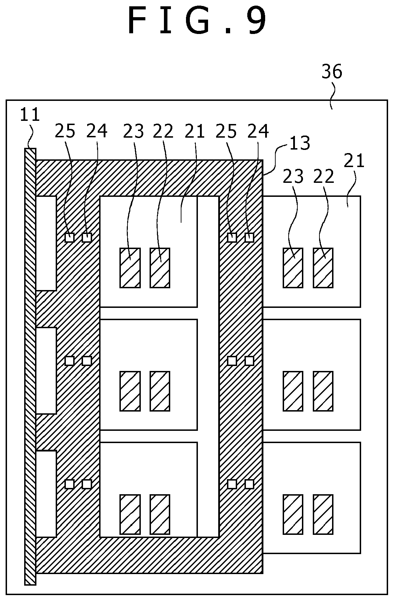

FIG. 9 shows a configuration of an inverter device according to a fourth embodiment of the present invention from which a capacitor and a bus bar are removed, when seen from the above. The same parts as those in the first embodiment of the present invention are labeled with the same reference signs.

The fourth embodiment of the present invention shows a case in which the modules for three phases are arranged adjacent to each other. The wires in the wiring conductor plate 13 of the laminated structure with the insulation sheet between the laminations, from the gate control terminal 24 and the ground control terminal 25 to the first control substrate 11 are arranged outside the modules 21 for three phases. By employing this method, the cooler 36 on which the modules are mounted can be made as small as possible. Moreover, the wire portion outside the modules can be bent at about 90 degrees in the outside of the modules 21. This can reduce the size of the inverter. According to the present invention, it is possible to configure a gate driving circuit for driving a power module, which can largely reduce the number of the assembling steps, can ensure the insulation property, and is excellent in noise resistance.

### Fifth Embodiment

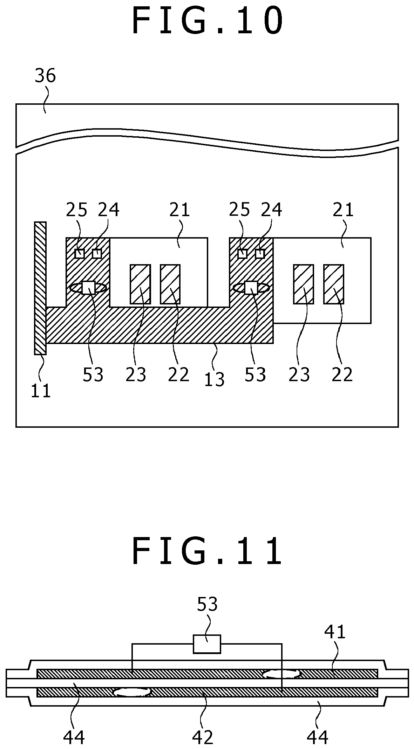

FIG. 10 shows a configuration of an inverter device according to a fifth embodiment of the present invention from which a capacitor and a bus bar are removed, when seen from the above. The same parts as those in the first embodiment are labeled with the same reference signs.

In the fifth embodiment of the present invention, a capacitor 53 is mounted on the wiring conductor plate 13 of the laminated structure with the insulation sheet between the laminations. This capacitor 53 is added for adjusting a switching rate of an IGBT mounted in the power module 21 or preventing malfunction of the IGBT.

FIG. 11 shows a cross section of the wiring conductor plate 13 of the laminated structure with the insulation sheet between the insulations according to the fifth embodiment of the present invention. For the cathode of the capacitor 53, the ground wire 42 is removed only at the gate control terminal 24. For the anode of the capacitor 53, the gate wire 41 is removed only at the ground control terminal 25. According to the present invention, a gate driving circuit for driving a power module can be configured which can largely reduce the number of assembling steps, can ensure the insulation property, and is excellent in noise resistance.

## Claims

1. A power converting device comprising:
a power module (21) having a high-voltage main terminal (22), a ground main terminal (23), and a gate control terminal (24) and a ground terminal (25) for driving; and
a gate driving circuit configured to drive the power module (21),
wherein the gate driving circuit includes a first control substrate (11) in which a signal input portion, a power input portion, a logic portion, a protection circuit portion, and a gate driving portion are mounted; and
wherein a gate-wire conductor plate (41) and a ground-wire conductor plate (42), which are laminated with an insulator (44) between them to form a laminated structure (13), are provided between the first control substrate (11) and the gate control terminal (24) and the ground terminal (25), such that the laminated structure (13) overlaps the gate control terminal (24) and the ground terminal (25);
the device being **characterized in that** it further comprises:
a capacitor (31) having a power terminal (32) and a capacitor ground terminal (33); and
main circuit wires (37, 38) configured to connect main terminals of the power module (22, 23) and terminals (32, 33) of the capacitor (31), respectively,
wherein the insulator (44) is also provided outside the gate-wire conductor plate (41) and the ground-wire conductor plate (42) to sandwich the gate wire conductor plate (41) and the ground-wire conductor plate (42),
wherein the laminated structure extends towards the gate control terminal (24) and the ground terminal (25), the ground-wire conductor plate (42) at the gate control terminal (24) is removed, the gate-wire conductor plate (41) at the ground terminal (25) is removed, and the gate control terminal (24) and the ground terminal (25) are connected to respectively the gate-wire conductor plate (41) and the ground-wire conductor plate (42) by screws (51), and
wherein a boss (52) formed on the gate-wire conductor plate (41) at the gate control terminal (24) extends to a level which is flush with a surface of the laminated structure (13) which is closest to the gate control terminal (24), and another boss (52) formed on the ground-wire conductor plate (42) at the ground terminal (25) extends to the same level.

2. A power converting device comprising:
a power module (21) having a high-voltage main terminal (22), a ground main terminal (23), and a gate control terminal (24) and a ground terminal (25) for driving; and
a gate driving circuit configured to drive the power module (21),
wherein the gate driving circuit includes a first control substrate (11) in which a signal input portion, a power input portion, a logic portion, a protection circuit portion, and a gate driving portion are mounted; and
wherein a gate-wire conductor plate (41) and a ground-wire conductor plate (42), which are laminated with an insulator (44) between them to form a laminated structure (13), are provided between the first control substrate (11) and the gate control terminal (24) and the ground terminal (25), such that the laminated structure (13) overlaps the gate control terminal (24) and the ground terminal (25);
the device being **characterized in that** it further comprises:
a capacitor (31) having a power terminal (32) and a capacitor ground terminal (33); and
main circuit wires (37, 38) configured to connect main terminals of the power module (22, 23) and terminals (32, 33) of the capacitor (31), respectively,
wherein the insulator (44) is also provided outside the gate-wire conductor plate (41) and the ground-wire conductor plate (42) to sandwich the gate wire conductor plate (41) and the ground-wire conductor plate (42),
wherein the laminated structure extends towards the gate control terminal (24) and the ground terminal (25), the ground-wire conductor plate (42) at the gate control terminal (24) is removed, the gate-wire conductor plate (41) at the ground terminal (25) is removed, and the gate control terminal (24) and the ground terminal (25) are connected to respectively the gate-wire conductor plate (41) and the ground-wire conductor plate (42) by screws (51), and
wherein a protrusion formed by the gate-wire conductor plate (41) at the gate control terminal (24) extends to a level which projects beyond a surface of the laminated structure (13) which is closest to the gate control terminal (24), and another protrusion formed by the ground-wire conductor plate (42) at the ground terminal (25) extends to the same level.

3. The power converting device according to claim 1 or 2, further comprising an electronic part provided on the laminated structure (13).

4. The power converting device according to claim 2,
wherein the electronic part is one of a resistance, a capacitor, and a Zener diode.

5. The power converting device according to any one of claims 1 to 4,
wherein a wire width of the gate-wire conductor plate (41) and the ground-wire conductor plate (42) is 3 mm or more.

6. The power converting device according to any one of claims 1 to 3, comprising conductor plates for a plurality of phases,
wherein the conductor plates for the plurality of phases are integrated.

7. The power converting device according to any one of claims 1 to 6, wherein the power module (21) incudes a SiC diode or a SiC-MOSFET.

8. A railway vehicle mounted with the power converting device according to any one of claims 1 to 7.

## Patentansprüche

1. Leistungswandlungsvorrichtung, die Folgendes umfasst:
ein Leistungsmodul (21), das einen Hochspannungshauptanschluss (22), einen Massehauptanschluss (23) und einen Gate-Steuerungsanschluss (24) sowie einen Masseanschluss (25) zur Ansteuerung aufweist; und
eine Gate-Ansteuerschaltung, die zur Ansteuerung des Leistungsmoduls (21) konfiguriert ist,
wobei die Gate-Ansteuerschaltung ein erstes Steuersubstrat (11) umfasst, in dem ein Signaleingangsabschnitt, ein Leistungseingangsabschnitt, ein Logikabschnitt, ein Schutzschaltungsabschnitt und ein Gate-Ansteuerabschnitt angebracht sind; und
wobei eine Gate-Draht-Leiterplatte (41) und eine Massedraht-Leiterplatte (42), die mit einem dazwischen liegenden Isolator (44) zur Ausbildung einer Laminatstruktur (13) laminiert sind, zwischen dem ersten Steuersubstrat (11) und dem Gate-Steueranschluss (24) sowie dem Masseanschluss (25) bereitgestellt sind, sodass die Laminatstruktur (13) den Gate-Steueranschluss (24) und den Masseanschluss (25) überdeckt;
wobei die Vorrichtung **dadurch gekennzeichnet ist, dass** sie außerdem Folgendes umfasst:
einen Kondensator (31), der einen Leistungsanschluss (32) und einen Kondensator-Masseanschluss (33) aufweist; und
Hauptschaltungsdrähte (37, 38), die konfiguriert sind, um Hauptanschlüsse des Leistungsmoduls (22, 23) bzw. Anschlüsse (32, 33) des Kondensators (31) zu verbinden,
wobei der Isolator (44) auch außerhalb der Gate-Draht-Leiterplatte (41) und der Massedraht-Leiterplatte (42) bereitgestellt ist, um die Gate-Draht-Leiterplatte (41) und die Massedraht-Leiterplatte (42) sandwichartig einzuschließen,
wobei sich die Laminatstruktur in Richtung des Gate-Steueranschlusses (24) und des Masseanschlusses (25) erstreckt, die Massedraht-Leiterplatte (42) an dem Gate-Steueranschluss (24) entfernt ist, die Gate-Draht-Leiterplatte (41) an dem Masseanschluss (25) entfernt ist und der Gate-Steueranschluss (24) und der Masseanschluss (25) jeweils mit der Gate-Draht-Leiterplatte (41) und der Massedraht-Leiterplatte (42) durch Schrauben (51) verbunden sind, und
wobei sich ein Ansatz (52), der auf der Gate-Draht-Leiterplatte (41) an dem Gate-Steueranschluss (24) ausgebildet ist, zu einer Höhe erstreckt, die mit einer Oberfläche der Laminatstruktur (13), die zu dem Gate-Steueranschluss (24) am nächsten ist, bündig ist, und sich ein weiterer Ansatz (52), der auf der Massedraht-Leiterplatte (42) an dem Masseanschluss (25) ausgebildet ist, zur gleichen Höhe erstreckt.

2. Leistungswandlervorrichtung, die Folgendes umfasst:
ein Leistungsmodul (21), das einen Hochspannungshauptanschluss (22), einen Massehauptanschluss (23) und einen Gate-Steuerungsanschluss (24) sowie einen Masseanschluss (25) zur Ansteuerung aufweist; und
eine Gate-Ansteuerschaltung, die zur Ansteuerung des Leistungsmoduls (21) konfiguriert ist,
wobei die Gate-Ansteuerschaltung ein erstes Steuersubstrat (11) umfasst, in dem ein Signaleingangsabschnitt, ein Leistungseingangsabschnitt, ein Logikabschnitt, ein Schutzschaltungsabschnitt und ein Gate-Ansteuerabschnitt befestigt sind; und
wobei eine Gate-Draht-Leiterplatte (41) und eine Massedraht-Leiterplatte (42), die mit einem dazwischen liegenden Isolator (44) zur Ausbildung einer Laminatstruktur (13) laminiert sind, zwischen dem ersten Steuersubstrat (11) und dem Gate-Steueranschluss (24) und dem Masseanschluss (25) bereitgestellt sind, sodass die Laminatstruktur (13) den Gate-Steueranschluss (24) und den Masseanschluss (25) überdeckt;
wobei die Vorrichtung **dadurch gekennzeichnet ist, dass** sie außerdem Folgendes umfasst:
einen Kondensator (31), der einen Leistungsanschluss (32) und einen Kondensator-Masseanschluss (33) aufweist; und
Hauptschaltungsdrähte (37, 38), die konfiguriert sind, um Hauptanschlüsse des Leistungsmoduls (22, 23) bzw. Anschlüsse (32, 33) des Kondensators (31) zu verbinden,
wobei der Isolator (44) auch außerhalb der Gate-Draht-Leiterplatte (41) und der Massedraht-Leiterplatte (42) bereitgestellt ist, um die Gate-Draht-Leiterplatte (41) und die Massedraht-Leiterplatte (42) sandwichartig einzuschließen,
wobei sich die Laminatstruktur in Richtung des Gate-Steueranschlusses (24) und des Masseanschlusses (25) erstreckt, die Massedraht-Leiterplatte (42) an dem Gate-Steueranschluss (24) entfernt ist, die Gate-Draht-Leiterplatte (41) an dem Masseanschluss (25) entfernt ist und der Gate-Steueranschluss (24) und der Masseanschluss (25) jeweils mit der Gate-Draht-Leiterplatte (41) und der Massedraht-Leiterplatte (42) durch Schrauben (51) verbunden sind, und
wobei sich ein Vorsprung, der von der Gate-Draht-Leiterplatte (41) an dem Gate-Steueranschluss (24) ausgebildet ist, zu einer Höhe erstreckt, die über eine Oberfläche der Laminatstruktur (13), die zu dem Gate-Steueranschluss (24) am nächsten ist, hinausragt, und sich ein anderer Vorsprung, der von der Massedraht-Leiterplatte (42) an dem Masseanschluss (25) ausgebildet ist, zur gleichen Höhe erstreckt.

3. Leistungswandlervorrichtung nach Anspruch 1 oder 2, die außerdem ein auf der Laminatstruktur (13) bereitgestelltes Elektronikteil umfasst.

4. Leistungswandervorrichtung nach Anspruch 2, wobei das Elektronikteil eines aus einem Widerstand, einem Kondensator und einer Zener-Diode darstellt.

5. Leistungswandlervorrichtung nach einem der Ansprüche 1 bis 4, wobei eine Drahtbreite der Gate-Draht-Leiterplatte (41) und der Massedraht-Leiterplatte (42) 3 mm oder mehr beträgt.

6. Leistungswandlervorrichtung nach einem der Ansprüche 1 bis 3, die Leiterplatten für eine Vielzahl von Phasen umfasst, wobei die Leiterplatten für die Vielzahl von Phasen einstückig ausgebildet sind.

7. Leistungswandlervorrichtung nach einem der Ansprüche 1 bis 6, wobei das Leistungsmodul (21) eine SiC-Diode oder einen SiC-MOSFET umfasst.

8. Schienenfahrzeug, das mit einer Leistungswandlervorrichtung nach einem der Ansprüche 1 bis 7 ausgestattet ist.

## Revendications

1. Dispositif de conversion de puissance comprenant :
un module d'alimentation (21) ayant une borne principale à haute tension (22), une borne principale de terre (23), et une borne de contrôle de grille (24) et une borne de terre (25) destinées à l'excitation; et
un circuit d'excitation de grille configuré pour exciter le module d'alimentation (21),
dans lequel le circuit d'excitation de grille comprend un premier substrat de contrôle (11) dans lequel une partie d'entrée de signal, une partie d'entrée de puissance, une partie logique, une partie de circuit de protection, et une partie d'excitation de grille sont montées ; et
dans lequel une plaque conductrice à fil de grille (41) et une plaque conductrice à fil de terre (42), qui sont stratifiées avec un isolateur (44) entre elles afin de former une structure stratifiée (13), sont prévues entre le premier substrat de contrôle (11) et la borne de contrôle de grille (24) et la borne de terre (25), de sorte que la structure stratifiée (13) chevauche la borne de contrôle de grille (24) et la borne de terre (25) ;
le dispositif étant **caractérisé en ce qu'**il comprend en outre :
un condensateur (31) ayant une borne d'alimentation (32) et une borne de terre de condensateur (33) ; et
des fils de circuit principal (37, 38) configurés pour relier les bornes principales du module d'alimentation (22, 23) et les bornes (32, 33) du condensateur (31), respectivement,
dans lequel l'isolateur (44) est également prévu à l'extérieur de la plaque conductrice à fil de grille (41) et de la plaque conductrice à fil de terre (42) afin de prendre en sandwich la plaque conductrice à fil de grille (41) et la plaque conductrice à fil de terre (42),
dans lequel la structure stratifiée s'étend vers la borne de contrôle de grille (24) et la borne de terre (25), la plaque conductrice à fil de terre (42) au niveau de la borne de contrôle de grille (24) est retirée, la plaque conductrice à fil de grille (41) au niveau de la borne de terre (25) est retirée, et la borne de contrôle de grille (24) et la borne de terre (25) sont reliées respectivement à la plaque conductrice à fil de grille (41) et à la plaque conductrice à fil de terre (42) par des vis (51), et
dans lequel un bossage (52) formé sur la plaque conductrice à fil de grille (41) au niveau de la borne de contrôle de grille (24) s'étend jusqu'à un niveau qui affleure une surface de la structure stratifiée (13) qui est la plus proche de la borne de contrôle de grille (24), et un autre bossage (52) formé sur la plaque conductrice à fil de terre (42) au niveau de la borne de terre (25) s'étend jusqu'au même niveau.

2. Dispositif de conversion de puissance comprenant :
un module d'alimentation (21) ayant une borne principale à haute tension (22), une borne principale de terre (23), et une borne de contrôle de grille (24) et une borne de terre (25) destinées à l'excitation ; et
un circuit d'excitation de grille destiné à exciter le module d'alimentation (21),
dans lequel le circuit d'excitation de grille comprend un premier substrat de contrôle (11) dans lequel une partie d'entrée de signal, une partie d'entrée de puissance, une partie logique, une partie de circuit de protection, et une partie d'excitation de grille sont montées ; et
dans lequel une plaque conductrice à fil de grille (41) et une plaque conductrice à fil de terre (42), qui sont stratifiées avec un isolateur (44) entre elles afin de former une structure stratifiée (13), sont prévues entre le premier substrat de contrôle (11) et la borne de contrôle de grille (24) et la borne de terre (25), de sorte que la structure stratifiée (13) chevauche la borne de contrôle de grille (24) et la borne de terre (25) ;
le dispositif étant **caractérisé en ce qu'**il comprend en outre :
un condensateur (31) ayant une borne d'alimentation (32) et une borne de terre de condensateur (33) ; et
des fils de circuit principal (37, 38) configurés pour relier les bornes principales du module d'alimentation (22, 23) et les bornes (32, 33) du condensateur (31), respectivement,
dans lequel l'isolateur (44) est également prévu à l'extérieur de la plaque conductrice à fil de grille (41) et de la plaque conductrice à fil de terre (42) afin de prendre en sandwich la plaque conductrice à fil de grille (41) et la plaque conductrice à fil de terre (42),
dans lequel la structure stratifiée s'étend vers la borne de contrôle de grille (24) et la borne de terre (25), la plaque conductrice à fil de terre (42) au niveau de la borne de contrôle de grille (24) est retirée, la plaque conductrice à fil de grille (41) au niveau de la borne de terre (25) est retirée, et la borne de contrôle de grille (24) et la borne de terre (25) sont reliées respectivement à la plaque conductrice à fil de grille (41) et à la plaque conductrice à fil de terre (42) par des vis (51), et
dans lequel une saillie formée par la plaque conductrice à fil de grille (41) au niveau de la borne de contrôle de grille (24) s'étend jusqu'à un niveau qui se projette au-delà d'une surface de la structure stratifiée (13) qui est la plus proche de la borne de contrôle de grille (24), et une autre saillie formée par la plaque conductrice à fil de terre (42) au niveau de la borne de terre (25) s'étend jusqu'au même niveau.

3. Dispositif de conversion de puissance selon la revendication 1 ou 2, comprenant en outre une partie électronique prévue sur la structure stratifiée (13).

4. Dispositif de conversion de puissance selon la revendication 2,
dans lequel la partie électronique est l'un d'une résistance, d'un condensateur, et d'une diode Zener.

5. Dispositif de conversion de puissance selon l'une quelconque des revendications là 4,
dans lequel une largeur de fil de la plaque conductrice à fil de grill (41) et de la plaque conductrice à fil de terre (42) est de 3 mm ou plus.

6. Dispositif de conversion de puissance selon l'une quelconque des revendications 1 à 3, comprenant des plaques conductrices destinées à une pluralité de phases,
dans lequel les plaques conductrices destinées à la pluralité de phases sont intégrées.

7. Dispositif de conversion de puissance selon l'une quelconque des revendications 1 à 6, dans lequel le module d'alimentation (21) comprend une diode SiC ou un SiC-MOSFET.

8. Véhicule ferroviaire équipé du dispositif de conversion de puissance selon l'une quelconque des revendications 1 à 7.
